# EUROPEAN PATENT SPECIFICATION

(11) **EP 3 949 301 B1**
(45) Date of publication and mention of the grant of the patent: **03.06.2026**
(21) Application number: 20782050.7
(22) Date of filing: 03.04.2020
(51) Int. Cl.: H04L 25/49, H04L 25/497, G06F 21/60, H04B 10/85, G01S 17/34

(54) **SECURITY OF ADVANCED SHORT-RANGE COMMUNICATION ARCHITECTURES**
SICHERHEIT VON ERWEITERTEN KURZBEREICHSKOMMUNIKATIONSARCHITEKTUREN
SÉCURITÉ D'ARCHITECTURES AVANCÉES DE COMMUNICATION À COURTE PORTÉE

(30) Priority: 03.04.2019 US 201962828756 P
(43) Date of publication of application: 09.02.2022
(73) Proprietor: Westmeyer, Paul, Lancaster, PA 17602 (US); Mazaheri, Renee, Lancaster, PA 17602 (US); Wertenberg, Russell, F., Belmont CA 94002 (US)
(72) Inventor: Westmeyer, Paul, Lancaster, PA 17602 (US); Mazaheri, Renee, Lancaster, PA 17602 (US); Wertenberg, Russell, F., Belmont CA 94002 (US)
(74) Representative: Kraus & Lederer PartGmbB
(86) International application number: PCT/US2020/026540
(87) International publication number: WO 2020/206223

(56) References cited:
- US-A1- 2008 161 986
- US-A1- 2010 080 386
- US-A1- 2016 003 946
- US-A1- 2016 323 246
- US-A1- 2018 003 816

## Description

The present invention is based upon and claims the benefit of provisional patent application No. 62/828,756, filed on April 3, 2019.

### TECHNICAL FIELD

In one embodiment, the invention is a method of securing a system's data link between a transmitter and associated receiver, as a co-located pair. Uniquely modulated waveforms transmitted by the transmitter are reflected back to the receiver as echoes.

### BACKGROUND OF THE INVENTION

Autonomy has become commonplace, if not essential, in society, and the vastness of threats to computing systems in autonomy has grown ever larger. Computers are linking together in novel applications for just about anything a human can envision. Product safety is reaching critical junctions in numerous ventures, none more obvious than the intersection of robotic decision-making and actions previously accomplished by a human. Trust in the computing behind the robotic action is a common theme. Autonomous vehicles on roads are asserted to be safe, but are they really safe? Are the computers directing actuators' action truly secure? Robots working aside humans is more commonplace in warehouse operations, especially more recently built facilities. Recent reporting suggest security is a concern that still is not fully resolved.

Attempts to secure computers have made significant progress but the nefarious actors are ever present. U.S. Patent No. 9,749,342 discovers the nefarious activities on a computing system by monitoring functionality with independent external sensors. U.S. Patent No. 10,419,131 stops the nefarious behavior by metering the communication link and requiring authentication by the authorized user, where the authentication is isolated from both the internet and the computer. Threats and counteractions need to be addressed for situations beyond the simple connected computing systems, such as autonomous activities. Computation threats to autonomous actions arise due to nefarious code changes or bad input data.

Vehicle full autonomy has been discussed for decades and is now being road-tested. The Society of Automotive Engineers (SAE) has established a worldwide definition set for autonomous vehicles ranging from pure manual (level zero or L0) to fully autonomous where human interfaces cease to exist (level 5 or L5). L2 vehicles, many on the roads, are driver assisted and can more or less operate within normal scenarios. L5 geo-fenced (perimeters defined range) taxi services are available in some cities.

Industrial robots have a long history. Magnetic tape pathways on floors for office mail services, where humans were required to be conscious of the robot, have been replaced with true robotic delivery systems. Likewise, factories with robotic assistants for difficult tasks (size, weight, or other challenges) have found acceptance. In warehouse operations human assistants have morphed into human replacements.

Early adoption of robotic replacements is accepted as "normal", cash dispensing machines, self-service at gasoline stations, and grocery stores to name a few. These examples still retain the customer human interaction. Grocery "pick-up" without shopping the aisles is available on a limited basis. Grocery carts with detectors/transmitters connected to a computer for sales total of items as "check-out" while roaming the isles is in stores.

More and more expressions of robotic engagement with human-centric scenarios, whether it be at home, school, factory, or office, are happening. Securing those engagement to protect humans and other valued assets are more complex because the nefarious actors are more aggressive and they have larger population of entry points. But, in situations where the humans are unaware of the engagements, such as autonomous activities, and potentially locked out for authentication purposes, another layer of safety is essential.

As smaller, more capable, computing systems populate the globe, teams of researches mesh networks, crowd source computing for example, to utilize them. Vast numbers of vehicles offer computational capacity and more often than not these systems are idle. US2016/003946 and US2018/003816 are considered prior art.

### BRIEF SUMMARY OF THE INVENTION

The invention is defined by the appended claims. Modulated active sensor waveforms are used to transport data, within a system, to a decision-making computer, in an autonomous or semi-autonomous operation environment. Modulation creates distinct wavefiorms when a multitude of in-band signals are present. The waveform content is shared between the paired transmitter and receiver, validating the data content of the echo. Variable data are the modulation pattern, controlled by a processor within the system, matching patterns tests at the receiver select which data enter the critical autonomous processes. Matched echoes are secured controlled communications. Validation of the system's transmitter modulation, at the receiver, enhances security of autonomous actions for robotic systems on roads and in factories, transportable computers in office and home settings. Secondarily these secured, under-utilized resources can safely be aggregated and repurposed without risk to their primary functions once secure communications are established.

In one embodiment, the invention is a method of securing a system's data link between a transmitter and associated receiver, as a co-located pair. Uniquely modulated waveforms transmitted by the transmitter are reflected back to the receiver as echoes. The unique modulated waveform is constructed from dynamic data. A matching filter compares a stored copy of the transmitted uniquely modulated waveform with the receiver collected echoes, accounting for expected changes due to reflections from stationary and moving objects. Matched echoes are from the transmitter and not from a secondary source, providing secure input for the decision-making autonomous algorithm.

In a second embodiment, the invention is a method of securing multiple data links between of many independent system transmitters and each transmitter's associated receiver, as co-located pairs. The individual, uniquely modulated waveform transmitted by any paired transmitter is reflected back to the paired receiver as echoes. The unique modulated waveforms are constructed from dynamic system data, a matching filter compares a stored copy each individual waveform of the uniquely modulated signals transmitted by individual transmitters with the paired receiver's collected echoes, accounting for expected changes due to reflections from stationary and moving objects. Matched echoes are from the paired transmitter associated with the paired receiver and not some secondary source, collectively the many individual matched pairs provide multiple secure inputs for the decision-making algorithms.

In a third embodiment, the invention is a method of combining passive and active signals from a single system to form a composite signal wherein the active component's data are validated by the passive component data. The active data aer passed onto the autonomous decision processes within the system providing secure input for the decision-making algorithms.

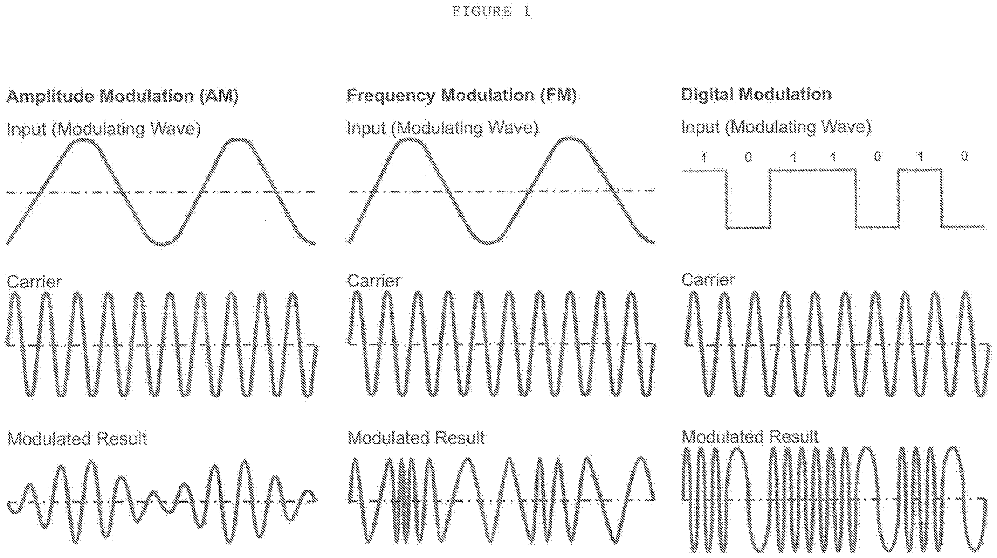

### BRIEF DESCRIPTION OF THE DRAWING

The figure shows the modulated active sensor waveforms used in the method of this invention.

### DETAILED DESCRIPTION OF THE INVENTION

Modulation technology applied to active short-range radar and lidar, and similar systems in other wavelengths, creates products with very different usages beyond their radar or lidar contributions to determining range, relative velocity, and angle to an object.

The figure shows the modulated active sensor waveforms used in the method of this invention. The waveforms are used to transport data within a system to a decision-making computer in an autonomous or semi-autonomous operation environment. Modulation can be used to create distinct waveforms that allow a multitude of discrete in band signals to be present.

The first product is secure intra-system communications used to support autonomous controls where some aspect of the intra-system data represents an object outside the system (radar echo of an object). Unlike classic radar or lidar products, the security of the waveform is used to address the underlying product, vehicle autonomy. If the radar or lidar data are unreliable, then the resulting actions based upon those data are unreliable. Adding a modulation verification test to the classic tests (range, doppler, angle) provides the assurance the data have not been corrupted. Additionally, any radar or lidar data failing the modulated echo pattern test in the receiver are excluded from the autonomy system. Autonomous sensor suites can include passive sensors as a secondary validation source of active sensors.

The second product is a self-contained intra-system control, without autonomous functions. When the whole of the system, such as a factor, are integrated with modulated radar or lidar, additional functional benefits occur for securing the operations of equipment in the factory. Machine to machine, or machine to human, controls can be secured with single or multiple modulated transmitter/receiver pairs.

Another product is inter-system transfer of data for situational awareness. When a first vehicle on the road detects another vehicle's radar or lidar, the data message used in the modulation are potentially useful to the near-term travels of the first vehicle. As autonomy sweeps into vehicles on roads, the behavior of vehicles could mimic a flock of birds, moving as if they could anticipate the groups' actions. Anticipating actions requires insight in current status and future intentions, much like manual turn signals are alerts of future action. Significant data are available from other vehicles, if the machines could share then anticipation would be possible. Simple things like road hazards could effectively be shared from a vehicle having experienced the hazard, if inter-vehicle (inter-system) communications were effective. The Dedicated Short-Range Communications system never really became an integral part of vehicles. Radar and lidar in Collision Avoidance Systems (CAS) are truly commonplace, adding a new feature to these ubiquitous components offer an easy means to be augmented.

Secure intra-system communications define the integrity generated by the system where some aspect of the data represent non-system objects; radar echoes are data generated by waveforms initiated and finished within the system but represent objects not within the system. Making the communication secure by random modulation prevent a spurious/nefarious waveform misrepresenting the range/relative velocity/angle to any object(s). Modulation is unique and only known to the paired transmitter/receiver and whatever system processor controlled the data used to generate the modulation sequence.

Within the system many communications are data-centric, such as performance telemetry or routine actuator functions (window up/down). Preventing unintended actuations or functional changes in performance as the result of a spurious/nefarious signal can be eliminated by isolating data that transfers on a modulated link from any other waveform. Likewise, the waveform modulation between the individual transmitter/receiver, or groups of individual paired transmitters/receivers, is unknown except to the transmitter/receiver and the system processor that generated the data used in the modulation, and will eliminate spurious/nefarious signals from invoking an action.

When all the transmitter/receiver pairs are intra-system, new strategies for layered protection can be employed. Actuation of a mechanism (object on an assembly line) can have a human interface like an overhead crane's remote controller operated from feet away (a safe location for the human). The human issues commands, via the remote controller, triggers the remote controller's transmitter/receiver to transfer a wireless signal to several other pairs of transmitter/receivers, only if those additional pairs validate the signal to each other and to the overhead crane mechanism will the overhead crane execute the command. Telemetry of the relative geometric relationships of the engaged transmitter/receiver pairs, at that moment, is unique and included in the modulations from each other. In this factory, a commercial dedicated location service is provided to locate all equipment.

Unsecure inter-system data are also generated by the modulated waveform, but in this scenario the waveform originated outside the system that processed it. These data are not secure because the receiving system cannot validate the data, but these data can be useful in describing the environment. A classic example is situational awareness of vehicles on the road.

Building a safe process, where computers are acting autonomously, has to take into account the data inputs to the computer controlling the autonomous action. Isolating 'trusted data' from all other data inputs to an autonomous control system can be accomplished with short range wireless radar and lidar systems. Unique modulations for a transmitter/receiver pair, where the receiver has a 'copy' of data used to define the transmitter's modulation, allows the receiver to distinguish signals originating from its paired transmitter from all other in-band signals. It is essential that the modulation pattern be changed frequently to prevent 'copies' being used to send data from another transmitter (a deliberate nefarious act).

Modulating the waveform of an active sensor's transmission enables echo verification of the data by the paired receiver. Many modulation techniques are known. Radar and lidar systems operate with simple waveforms, in some cases these waveforms have no modulation, the echoes are effectively 'paired' with a universal signal. For radars the universal chirp is essentially a frequency ramp from some start frequency to some end frequency without any amplitude, phase or other signal modulation. Echoes are checked for time of flight (this defines range), doppler shift (defines relative motion), and angle. Lidar are a bit different from radars but have effectively the same distance, doppler and angle capabilities. A common modulation of lidar is pulse position where the data are the times (as defined by a clocking function) between pulses.

For data trust there will be two defined environments, an intra-network where all waveforms' echoes are confined within the system of autonomous actions and an intra-network where some waveforms interact with external surfaces, outside the system of autonomous action, to produce their echoes. When external waveform echoes are allowed, the receivers will potentially detect additional in-band signals performing similar functions for like-systems sharing the same external world interfaces. These additional in-band signals from external waveforms might be echoes or signals that have not reflected (direct line of sight between the unknown transmitter and the system receiver(s)).

An example of the confined scenario is a factory where machinery of fixed and mobile exists. Each machine has one or more transmitter{s}/receiver(s) and data are defined by local processor(s) built into the machine/factory. Data are sent between various intra-network nodes with confidence; no data are being nefariously altered. In this case the building's relatively large physical dimensions might be subjected to stray in-band energy, most likely from nearby systems using similar technologies. Stray signals are deliberately attenuated to not be detected by the system receivers; many attenuation strategies are known including baffles on the receivers to wall or window treatments.

Autonomy can be confined to a small volume like the interior of an automobile. While the vehicle is small compared to a factory, the local roadway environment is full of other vehicles using the same technologies.

Current radar/lidar transmitter/receiver pairs in Collision Avoidance Systems (CAS) are rated for hundreds of meters, more than sufficient for the factory setting and clearly sufficient for the interior of an automobile. Capable radars and lidars are the focus of a paired transmitter/receiver, but any active sensor works.

The traditional automotive CAS is an example of external surfaces generating the reflections of the waveform.

Autonomous data trust can be established in a system using a wireless transmitter/receiver with changing patterns within a field of the data, where the control over the changing pattern is an internal process. Even more sophisticated trust scenarios, groups of transmitter/receiver pairs, are very practical. As the data trust process is designed around an ever-changing pattern the potential to capture attempts to inject bad data is increased.

Two version of data patterns are defined; one is fixed metadata, the other is where the data (system collected telemetry is one data source) are the pattern. Headers and other overhead bits represent metadata. Header/Overhead bits are deterministic and provide contextual meaning to the rest of the message. Unfortunately, these overhead bits are very deterministic, which means they generally can be copied or predicted as to what changes are going to happen in that data field. True data bits are defined uniquely for each message. Data bits have weak relationships from sample to sample and are random enough to make copies of previous message useless. Likewise predicting the changes is difficult to do. More complex relationships between multi-paired transmitters/receivers can make predictions improbable.

Modulated waveform checking can immediately isolate a waveform source as either originating from the paired transmitter or not being from the paired transmitter. This check needs data with sufficient variation from pulse to pulse to rule out a copied pulse being used as a 'false echo'. A 'false echo' is defined as a waveform sent back to the origin with attributes expected of the reflected echo of the original paired transmitter.

A classic radar chirp for a 76-81GHz band, at 2KHz pulse repetition rate, modulation with conventional strategies will support hundreds of Mbps. As a reference, the 75 MHz of bandwidth in the Dedicated Short-Range Communications (DSRC) system supports 6-27 Mbps of data. Standardization, like DSRC, for an industry is critical for inter-operability.

Much of this specification will follow a radar-centric discussion, but both radar and lidar, and newer forms of photonic communications, including Light Emitting Diode (LED) and even Ultraviolet and Infrared wavelengths apply.

In a single transmitter/receiver pair, connected to a 'central' processor, the modulation data representing a variable data field contribution as defined by a processor (central processor or local processor within the chipset) will be used to modulate the chirp. Where the central processor gets the data is unimportant. The matching of the transmitted waveform to the received echo is done 'on-chip' as the chipset has its own processing, which is not the 'central processor'. This on-chip processor also performs the classic range, doppler, and angle calculations.

After the on-chip processor completes processing each chirp's four attributes (pattern check, range, doppler, and angle) other content of the received signal can be decoded. Within the pattern are information data. For any echo meeting all four attributes, including the matching of the modulation, these data are sent to the central processor as a contribution to any autonomy decision-making. For any waveform failing the pattern match filter the waveform is processed as information that may or may not be useful to the system's computer in some fashion. The previous mention of a road hazard is an example of information data.

Radar travel at the speed of light, echoes return to the receiver, for most range bins, in under a microsecond. The full chirp duration (2 KHZ pulse repletion rate) last approximately half of a millisecond. Detection of the pulse train by a secondary receiver (assumed nefarious) is simple, and responding is also simple, including a false-echo of an object farther away than the actual secondary receiver's actual location, this buys time to inject corrupt data. But, the doppler or angle will fail their respective checks.

The classic Collision Avoidance System in an automobile will have active sensors covering the full perimeter. Fooling one sensor might work but multiple sensors makes the false-signal generation impractical. A single nefarious radar source at some random distance from a moving vehicle with CAS (modulated) will initially be part of several CAS Field-of-Regard at longer ranges, as the range closes some of the previously overlapping Field-of-Regard will cease to overlap. Whichever CAS remains in the beam of the nefarious radar source could continue to have failures of some echo tests (range, doppler, angle) for some of the energy collected by the receiver even if the pattern test is fooled. In such a scenario the original waveforms are being processed, unless the receiver is in Denial-of-Service (DoS) mode caused by the nefarious signal or some additional signal. If this transmitter/receiver pair is critical to vehicle autonomy the vehicle will need to take appropriate actions to rid itself of the DoS.

The secondary purpose of supplying the telemetry as modulation data is to feed non-control data to a second vehicle as information, safely, without compromising the autonomy of either vehicle. Each vehicle is able to isolate its own radar signals from other sources.

Telemetry from all the Electronic Control Units (ECUs) are the data filling the 'true data' or variable data in the waveform's modulation. Data from any sensor, collected at whatever sampling rate, reports back to the vehicle's main processor via other transmitter/receiver pairs connecting to the main processor (or local slave processors in a cascade system of processors), will become the main processor's inputs to many active sensors' waveform.

In one scenario the many pairs are all using the same main computer input to define the modulation. In another scenario the pairs are using unique modulations. Raw sensor data is not collected fast enough to fill the available modulation space of the many radars.

A typical road-worthy vehicle has 10-20 radars and/or lidars supporting autonomy. One option is to randomly skip portions of the frequency ramp. Another strategy is to insert bits collected from an external data source repeating the message from the other source, this is very important for 'flock-of-birds' anticipation opportunities. When warning data are shared with nearby systems the chain can grow to alert systems well outside the area of immediate concern. Yet another option is to fill modulation space with pseudo-random generated values. These options are just illustrative, not to be deemed complete or exhaustive. Not all chirps have to be modulated and the pattern may be something created from data in multiple chirps. Effectively the manufacturers of CAS radars and lidars will provide a capability, the integrating contractors will establish the rules in conjunction with their subsystem suppliers. Most subsystem suppliers will defer to the integrator (a vehicle manufacturer). In the automotive industry the subsystem suppliers use Electronic Control Units (ECUs) terminology. Identical ECUs are used by most integrator (meaning major vehicle manufacturers), which provides standardization.

As CAS radars and/or lidars are deployed into non-automotive designs, for robots of other functionalities, the flexibility of the design will allow customization to those markets. Within a factory with fixed structures and mobile units, a wide array of controlled systems are integrated into assembly line operations, it is entirely possible for hundreds to thousands of radars to be working concurrently. Selective transmitter/receiver pairs under the control of a local master processor may be filtering out data based upon source identification or the patterns of waveforms, or a hundred different filtering strategies. Nearby machinery can be assigned a region of the spectrum with no concern for other portions of the chirp.

In a home environment the system master control may be a computer, and as electronics move about the house, the master selects dynamic data structures. No two electronics have to be aware of the others' data security.

Conversely, when multiple transmitter-receiver pairs are grouped to build a mesh, with more complex requirements on establishing truth for a data source, knowledge of multiple sources' waveforms is essential.

By example, vehicles on the roads can connect to other vehicles, and to infrastructure (another system) such as road signs or traffic light. If the connection method is via active sensors, radars and lidars, various modulation techniques are available to transfer intra-vehicle data with security. Inter-vehicle data transfers are by definition non-secure. Connectivity beyond the secure perimeter of a single vehicle (a system) is necessary and can be absolutely safe, where safe is defined as those non-secure data are never allowed in the processor in control of the vehicle's actuators.

Conventional techniques for modulation of carrier signals in active systems like radars and lidars provide a simple and effective means to generate testable patterns. For active sensors these patterns can include a fixed data field much like an Internet Protocol (IP) address and a variable field unique for a short period of time before a newer equally unique variable field replaces the previous variable field. When the variable field is created a copy is provided to the transmitting subsystem of a transmitter/receiver pair and a second copy is provided to the local receiver subsystem of a transmitter/receiver pair for comparison when the echo is captured. Within the variable portion of the modulated waveform is information content, designed to be variable. The pair are generally located in a combined transmit/receive module within the ECU. So, both have access to the transmitter data structure content. Any echo captured by the paired receiver is compared to the transmitted waveform. While stray echoes from other transmitters will be captured and even some direct line-of-sight waveforms from other transmitters might be detected, these are filtered out of the autonomous processing as they fail the comparison test.

Within the field of regard any transmitter pulse can be echoed back to its paired receiver, or can provide direct line of sight data to a second receiver, or the second receiver can detect an echo off some random surface. The second receiver may or may not have the original waveform to perform a matching test. Whether the receiver is connected to the processor that generated the variable data field's content is critical to what happens to the data in the variable field.

The easy way to describe the data test for modulation is to break the signals streams down by source and receiver.

If the paired receiver is collecting the echo of its paired transmitter then the receiver is fully aware of the modulation for each waveform. ALL data in the echo is truth data.

If another (second) receiver collects an echo from the first transmitter of a different transmitter/receiver pair on the same vehicle there are two possible outcomes. If the second receiver has the same waveform then the second receiver will process the data as if it came from its paired transmitter. This sequence can result in a weird effect as the paired second transmitter echo will also be getting processed. Unless these transmissions were absolutely synchronous the two waveforms will collide in processing. Even if synchronous these two waveforms will cause oddities because of the slight difference in angle to many objects in the echo. If the second receiver is not paired to the first paired transmitter then the echo will process but the products are not truth data!

In yet another scenario the receiver, any receiver on the vehicle, collects a waveform from another vehicle or from infrastructure sources, these will always fail multiple data checks; metadata will be different, and variable data will be different. Since these unmatched waveforms don't survive the matched waveform data check their contents are moved into a processor to check the data fields for information.

In a single automobile (a system) many actuators are controlled by their respective Electronic Control Units (ECU). ECUs are interconnected via a wired system called the Connected Area Network (CAN).

Replacing the CAN and the actuator controller interfaces with wireless CAS-based transmitter/receiver system is the next logical intra-system security step. Intra-vehicle data fields are under the control of the local CAS processor, which in turn is under the control of a master processor.

As paired transmitter/receiver within a single actuator controller send and receive data some portion of the data field are being used as dynamic identification. Self-recognition is a simple receiver check of the retuned echo against the content of the transmitted pulse; since there is no doppler the frequencies between the echo and originally transmitted pulse will be unchanged. Additional checks have interesting values for intra-vehicle pulses. First, the self-check can validate the echo is a copy of the transmitted modulated waveform. Secondly, the echo has to be from a very short distance to be intra-vehicle (eliminating any echo from a distance beyond the physical perimeter of the vehicle). Third, the echo has zero doppler, any portion of the vehicle is not moving with respect to any other part of the vehicle. Lastly, the angle of the echo should be predefined by design. Some or all of these simple checks will fail for a waveform coming from any other transmitter attempting to mimic the echo.

Beyond these classic checks of a radar's echo additional checks can be established within the vehicle. When a dynamic data field is being created, from inputs collected by a processor, that processor can share aspects of the dynamic data with other nodes, transmitter/receiver pairs, building a mesh between the nodes. With proper alignment of the antennae for the mesh nodes various forward signals (as opposed to echoes) can be collected by the receivers within the mesh. A purely geometric solution exists using all of the classic radar test; distance, doppler, and angle. A First Transmitter in an ECU can become a validation node for a second transmitter in a second ECU, provided the shared dynamic data are common. Generating a dynamic data field is critical to this intra-vehicle communications system.

Just as the mesh node is validating other node's dynamic signal, and each is validating the echoes of its own pulse, the signals can potentially be captured by an unintended receiver. If the contents of the waveform's dynamic data are not being changed rapidly then a nefarious external node, which could be inside the perimeter, has a chance of passing several of the checks. The nefarious node's range can satisfy for one vehicle node but obviously it should be wrong for other vehicle nodes, and doppler will be zero and pass, but the angle should be wrong unless an alignment is made with a pair. With clever vehicle designs these self-consistent checks, of the vehicle's mesh of nodes, should detect a nefarious random node inside the vehicle. A local secure processor communicating with white-listed addresses within the vehicle will not be generating fixed field data for the nefarious node. With a changing nodal input for each assigned node the nefarious signal will be found, and eliminated from further processing, by using the same techniques of range, angle and geometry to identify the source.

If the nefarious waveform originated from outside the vehicle then several self-consistency checks should fail. First, the nefarious source will need to decode the dynamic portion of the waveform and reverse engineer the data content. Assuming the vehicle is using the same dynamic data content for many chirps then the nefarious chirp, in principle, can pass the pattern check at the vehicle's receivers (the receiver components of the transmitter/receiver pairs). However, at the next dynamic pattern change the paired receivers will collect two signals, one as the echo of its paired transmitter's chirp and also a second chirp, (not an echo) from the nefarious source. These will mismatch and therefore the nefarious source will be flagged. Ideally a dynamic pattern will exist for no more than a few chirps, but even if the pattern lasts a thousand chirps (nominally the chirp rate is several thousand per second) this nefarious source has less than one second to inflict harm. Harm only occurs if the subsequent self-consistency check is also fooled. The doppler could be faked if properly adjusted by the nefarious chirp source to correct for the potential movement of either the nefarious source or the vehicle. Likewise, the angle might satisfy one pairing, but it is physically impossible to satisfy multiple pairings.

What about inter-vehicle waveforms providing communications? A secondary processing step should occur for all receiver tested waveforms that fail one or more self-consistency checks for intra-vehicle communications. Dynamic data are valid for the vehicle that generated those data, which means there is value in the information.

SCENARIO: Driver 1 in right lane wants to be the lead vehicle in center lane.

Level 4 Society of Automotive Engineer Autonomous Vehicles (human can still interact with controls). At Level 5 there are no human control interfaces, steering wheel and petals. Autonomy is a State description, whereas Collision Avoidance System is a group of components including sensors and processors.

Example is Level 4 Autonomy with a human causing a problem for other autonomous vehicles:
There are 16 vehicles travelling in 3 lanes on an Interstate Highway, 5 vehicles in the left lane, 8 vehicles in the center lane, and 3 vehicles in the right lane.

The 5 vehicles in the left lane are positioned behind the other 11 vehicles. The 5 vehicles in the left lane are moving faster than the other 11 vehicles, therefore, the 5 vehicles in the left lane are decreasing the separation distance to the 11 other vehicles. For this example, there is an initial separation distance of three seconds between the lead left lane vehicle and the rear vehicle in the center lane. We will assume this corresponds to a distance of about 250+ feet.

The remaining 11 vehicles are positioned with 8 vehicles in the center lane and 3 vehicles in the right lane, all travelling at the same speed (velocity).

All 16 vehicles are closely spaced, less than a fraction of a second apart, as their respective active collision avoidance systems are engaged and operating autonomously at level 4.

Vehicles are identified as Right Lane Vehicle 1 in the lead position and Right Lane Vehicle 3 in the last position in the Right lane sequence.

The Center Lane has 8 Vehicles, C1-C8.

Left lane has 5 vehicles, L1-L5.

The lead vehicles being chronologically first respectively in each lane. Lead vehicles in the center and right lanes are parallel to each other, the spacing between the vehicles in both lanes is effectively identical.

Each vehicle is equipped with 18 active radar units, 5 on the front bumper, 5 on the rear bumper, 4 on each side of the vehicle. Each radar has a unique identifier. The radars are all operating in the same single band, 76-81GHz. Also, all radars are the same brand, same manufacturer, maximizing signal overlap, and generating the highest noise floor. For this example, no lidars or passive cameras are in use, but many scenarios will include those sensors.

What does each vehicle's Collision Avoidance System sensor detect? Pulses (transmission) are sent out from 18 transmitters on each of the 16 vehicles, totaling 288 distinct sources. Receivers detect echoes returning from their paired transmitter and other pulses from 287 sources (noise) not paired with that receiver; most of the 287 not-paired sources are not going to be detected by most of the receivers. For each vehicle 18 paired inputs from radars with modulation originating from that vehicle are analyzed in the Collision Avoidance System as part of autonomous decision-making. 270 sources of informational data are also available, most of these 270 sources are never going to be detected by most of the receivers. However, some of the time a stray pulse will be detected, lots of multi-path stray opportunities.

### Lead Vehicle in Right lane:

Lead Vehicle in right lane (R1) has no moving targets in front of the vehicle. The R1 5 front bumper radars' receivers detect echoes from stationary objects representing roadway infrastructure, these echoes have two potential vehicle sources, the Lead Vehicle in Right lane and the Lead Vehicle in Center lane. Beyond the radar reflections from these two lead vehicles in the center and right lanes, radar signals emitted by any infrastructure source will be detected. R1 echoes matching their transmitted signals are secure data for autonomous processing, all other signals are deemed unsecure and useful as informational data sources. Autonomous actions based upon the 5 forward radars will suggest no action except maintaining lane control, based upon predefined positions of fixed infrastructure, road edge detection etc. However, the lane control has the side-looking radars' inputs as primary decision inputs.

The R1 side-looking radars are providing dramatically different inputs to the autonomous decision-making. Righthand side radars have rapidly changing observations caused by an ever-changing profile of objects alongside the righthand side of the roadway, vegetation and man-made structures. Important input data to the righthand side radars are the return echoes of where the roadway surface ends, compared to expectations of lane edge distance. Lefthand side radars are creating close object echoes of the vehicle paralleling in the center-lane. These 4 radars are each receiving the echoes from their own transmitters and direct signals from the respective center lane vehicle transmitter aligned with the right lane receiver; it is possible these radar signals are not aligned and the beam spread is not broad enough due to the relatively close relationship of the vehicles. Matched filters will distinguish these two signals passing the true secure echo onto the autonomous processing and using the center lane vehicle inputs as information data. Autonomous action will maintain vehicles' lane-to-lane separation, with respect to lane-to-lane boundaries. Any driver action to override the autonomous lane control will be met with alerts based upon the vehicle manufacturer designs. Actual manual override should not occur until the adjacent vehicles have sufficient spacing to allow a safe transition to manual control.

The five R1 rear bumper radars will generate 5 independent secure inputs to the (vehicle 1 transmitter to vehicle 1 receiver paired) and also 5 unsecure receiver inputs from vehicle 2's transmitters. The unsecure informational data should not be used to control actuators in vehicle 1.

Similar assessments are logical for each of the 16 vehicles. Uniquely, the vehicles in the left lane, those vehicles which are moving a bit faster, have a view to their right front detecting the upcoming cluster of center lane vehicles. The right lane vehicles are blocked from direct view; however, with shared information data the left lane vehicles (all of them) are fully aware of the hidden from view right lane vehicles.

Several options exist for the formation of the right and center lanes vehicles. One option is to have the remaining vehicles slow and allow the manual vehicle to move into a lead position of the center lane. Another option is to look at moving all eight center lane vehicles into the left lane creating a clear center lane for the manual action to occur safely. Executing an eight-vehicle lane change will require knowledge of the left lane's usage. A smaller number of center lane vehicles could be moved (possibly the first one or two or even three) and the remaining center lane vehicle slow to avoid impact with the manual override vehicle shifting lanes.

So, how fast can the collective of vehicles make a group decision? How sure is the group in that decision, and how does it come to be executed? Alternatively, can a single vehicle operating autonomously, other than the manual decision vehicle, make a decision that cascades into many single vehicle decisions? Oddly, birds may hold the key to the flock movement decision matrix. The movement of birds nearby are just part of the clues used, according to zoologist Wayne Potts they anticipate by observing close and far within the flock.

With that logic embedded into the group movement of level 5 autonomous vehicles the data of adjacent vehicles are required. These data are what we call 'informational data'.

Informational Data has multiple functions, first it provides intentions information about the adjacent vehicles. In this scenario the driver wishing to change lanes (right to center) might have touched his turn signal, or just nudged the steering wheel to the left.

The rear radars of every vehicle will detect the vehicle driving a fraction of a second behind, this is critical to the lead right lane vehicle. Upon making an overt action of wanting to change lanes the data content of the chirps will change, immediately. These data will provide a clear message of intention --- in some future moment expect the vehicle to shift lanes. These data are much like birds looking for action to be taken.

The lead vehicle in right lane will change the chirps in all 18 radars, the informational content section of the data field will reflect a lane change request. The absolute time of each pulse is nominally 0.0005 seconds, with the vehicles moving about one-half inch for each pulse. Therefore, many pulses will occur in a few feet of vehicle motion. Once a valid input is received as informational data, this is reflected in the content changes in those data fields of the chirp. This ensures the drivers in other cars are alerted to the fast moving lead right most vehicle.

The four (4) driver-side radars on the right lane vehicle 1 (the one with the aggressive driver) have pinged the paralleling center lane vehicle. Meanwhile every radar in each vehicle has received the new data, which was daisy-chained from one vehicle to the next, and a decision will be made for each vehicle. The 'informational data' are receiver captured but the modulation test fails; vehicle 1 modulation pattern fails in all other vehicles' receivers check of the modulation pattern. In this example as the driver of right lane vehicle 1 moves his steering wheel this will generate new dynamic data in his own chirp, which his own receivers accept as truth data (it came from vehicle 1 transmitters). However, for right lane vehicle 2 (R2) and center lane vehicle 1 (C1) that receive these data the urgency of the information is critical. These new data are shared in subsequent chirps from other vehicles.

Actually, the movement of the vehicle from the right lane to the center lane will be delayed by the autonomy functions, as the warning sounds, lights or whatever tell the driver of right lane vehicle 1 there is a vehicle to the left and it is not possible to shift lanes as the driver wants. This delay gives the radars time to share the status updates.

Informational data will be collected by all nearby vehicles, including vehicles that don't have a direct view of the lead vehicle in the right lane, these informational data will be retransmitted from the vehicles nearest to the vehicles farthest from the lead vehicle in the right lane. Some vehicle's autonomous decision process will trigger a second movement and then a third and so forth.

Each decision in each of the associated 15 vehicles will cause an interruption to what was autonomously occurring to address the evolving situation.

A single vehicle's internal communications are secured by several concurrent processes. First, the communications systems are wireless, which on the surface seems counter-intuitive as wireless means any remote node might be able to become integral into the overall system. Second, all communications are deliberately pointed inward, meaning the exterior world can't get a good sense of the actual wireless signals; again counter-intuitive as the left-side of the vehicle is beaming signals toward the right-side and some will escape to the outside world. With proper baffling in highly directional antennae, beams with limited power just don't transmit far.

Functions within the vehicle typically consist of an actuator, which move a window up/down or increase the flow of electrons to/from the electric motors. Controllers are built for each unique function, nominally called Electronic Control Units (ECUs). With small transmitter/receiver these ECU devices can have multiple inputs as triggers to execute a command and send data back to the processor(s) acting as partial authenticators or as main processors building the CAS dynamic content.

With proper filtering the receivers can test for simple signal characteristics; distance, relative velocity, and angle of signal origin. For internal sources these values are absolutely deterministic; distance is a few feet and known to a small fraction of an inch, relative velocity is zero, and angle is defined by relative positions. A level 4 autonomous vehicle will determine critical actuator (braking steering, acceleration) controls based upon CAS inputs. In the previous example some vehicles might change lanes. To ensure the actuators are only responding to valid inputs each actuator will have its own transmitter receiver pair with a dedicated wireless link to a source of commands.

The lane change scenario involves truth data from numerous CAS radars. The actual command to perform the action comes from a processor that ingests all these CAS outputs. The central processor, knowing the positions of each CAS, and the internal codes to formulate the chirps from each transmitter/receiver pair, including the internal dynamic data provided by the processor, means the actuators are getting commands from a processor with full knowledge of all the ECUs.

A lessor actuator, like window up/down, needs input from a human moving a toggle switch or button(s). Once touched, the up/down switch w2ill activate a CAS transmitter/receiver pair, this pair will in turn flood several companion transmitter/receiver pairs, each of those pairs will test the range, velocity, and angle, plus a new parameter fixed geometry of the companions. This 4-ways test has only one solution, thus no external transmitter/receiver CAS could be nefariously attempting to move the window.

## Claims

1. A method of securing a data link between a transmitter and a receiver comprising the step of using modulated active sensor waveforms to transport data to a decision-making computer in an autonomous or semi-autonomous operation environment,
wherein uniquely modulated waveform transmitted by the transmitter are reflected back to the receiver as echoes,
wherein a matching filter compares a stored copy of the uniquely modulated waveform with receiver collected echoes, wherein the matched echoes are from the transmitter and not from a secondary source
the method further comprises the step of using modulation to create distinct waveforms that allow a multitude of discrete n-band signals, and the steps of sharing the distinct waveforms between the transmitter and the receiver and validating the data in an echo, wherein the decision making computer selects patterns at the receiver and determines which data enters the operation environment.

2. A method according to claim 1 wherein the computer controls the data into modulating patterns.

3. A method according to claim 1 wherein the selected patterns are matched echoes that are secured controlled communications.

4. A method according to claim 1 wherein the selected patterns are a validation of the transmitter modulation, and preferably, the validation enhances security of the operation environment.

5. A method according to claim 1 wherein the step of validating enhances security for robotic systems on roads, in factories, in offices, in homes and in transportable computers.

## Patentansprüche

1. Verfahren zum Absichern einer Datenverbindung zwischen einem Sender und einem Empfänger, umfassend den Schritt des Verwendens modulierter aktiver Sensorwellenformen, um Daten zu einem Entscheidungscomputer in einer autonomen oder teilautonomen Betriebsumgebung zu transportieren,
wobei eindeutig modulierte Wellenformen, die von dem Sender ausgesendet werden, als Echos zu dem Empfänger zurückreflektiert werden,
wobei ein Abgleichfilter eine gespeicherte Kopie der eindeutig modulierten Wellenform mit den von dem Empfänger erfassten Echos vergleicht, wobei die abgeglichenen Echos von dem Sender und nicht von einer sekundären Quelle stammen,
wobei das Verfahren ferner den Schritt umfasst, Modulation zu verwenden, um unterscheidbare Wellenformen zu erzeugen, die eine Vielzahl diskreter n-Band-Signale ermöglichen, sowie die Schritte des Teilens der unterscheidbaren Wellenformen zwischen dem Sender und dem Empfänger und des Validierens der Daten in einem Echo,
wobei der Entscheidungscomputer Muster am Empfänger auswählt und bestimmt, welche Daten in die Betriebsumgebung gelangen.

2. Verfahren nach Anspruch 1, wobei der Computer die Daten in Modulationsmuster umwandelt.

3. Verfahren nach Anspruch 1, wobei die ausgewählten Muster abgeglichene Echos sind, die gesicherte kontrollierte Kommunikation darstellen.

4. Verfahren nach Anspruch 1, wobei die ausgewählten Muster eine Validierung der Sendermodulation darstellen und vorzugsweise die Validierung die Sicherheit der Betriebsumgebung erhöht.

5. Verfahren nach Anspruch 1, wobei der Schritt des Validierens die Sicherheit für robotische Systeme auf Straßen, in Fabriken, in Büros, in Wohnungen und in transportablen Computern erhöht.

## Revendications

1. Procédé de sécurisation d'une liaison de données entre un émetteur et un récepteur comprenant l'étape consistant à utiliser des formes d'onde de capteur actif modulées pour transporter des données vers un ordinateur de prise de décision dans un environnement de fonctionnement autonome ou semi-autonome,
dans lequel des formes d'onde modulées de manière unique émises par l'émetteur sont réfléchies en retour vers le récepteur sous forme d'échos, dans lequel un filtre de correspondance compare une copie enregistrée de la forme d'onde modulée de manière unique à des échos collectés par le récepteur, dans lequel les échos correspondants proviennent de l'émetteur et non d'une source secondaire,
le procédé comprend en outre l'étape consistant à utiliser une modulation pour créer des formes d'onde distinctes qui permettent une multitude de signaux discrets à n bandes, et les étapes consistant à partager les formes d'onde distinctes entre l'émetteur et le récepteur et à valider les données dans un écho, dans lequel l'ordinateur de prise de décision sélectionne des motifs au niveau du récepteur et détermine quelles données entrent dans l'environnement de fonctionnement.

2. Procédé selon la revendication 1, dans lequel l'ordinateur commande les données selon des motifs de modulation.

3. Procédé selon la revendication 1, dans lequel les motifs sélectionnés sont des échos correspondants qui sont des communications commandées sécurisées.

4. Procédé selon la revendication 1, dans lequel les motifs sélectionnés sont une validation de la modulation de l'émetteur, et de préférence, la validation améliore la sécurité de l'environnement de fonctionnement.

5. Procédé selon la revendication 1, dans lequel l'étape de validation améliore la sécurité pour des systèmes robotisés sur des routes, dans des usines, dans des bureaux, dans des maisons et dans des ordinateurs transportables.
